# EUROPEAN PATENT APPLICATION

(11) **EP 2 916 541 A1**
(43) Date of publication of application: **09.09.2015**
(21) Application number: 13870272.5
(22) Date of filing: 14.08.2013
(51) Int. Cl.: H04N 7/18

(54) **METHOD, APPARATUS AND VIDEO MONITORING SYSTEM FOR PROVIDING MONITORING VIDEO INFORMATION**

(30) Priority: 05.01.2013 CN 201310002264
(71) Applicant: ZTE Corporation, Shenzhen, Guangdong 518057 (CN)
(72) Inventor: XIAO, Hanlin, Shenzhen Guangdong 518057 (CN); ZHOU, Hongji, Shenzhen Guangdong 518057 (CN)
(74) Representative: Schröer, Gernot H.
(86) International application number: PCT/CN2013/081487
(87) International publication number: WO 2014/106384

(57) **Abstract**

A method, apparatus and system for providing surveillance video information are provided. The method comprises: receiving a surveillance video; performing characteristic recognition on each video frame in said surveillance video to obtain characteristic information respectively corresponding to said each video frame; wherein, characteristic information corresponding to each video frame in an ith video clip of said surveillance video matches the ith target characteristic information of M pieces of target characteristic information; determining video-related information corresponding to the ith video clip; sending the video-related information corresponding to at least one video clip of M said video clips to a client unit. The technical solution described above provides a user with the video information relating to critical information such as a target person or object, thereby reducing the time and labor costs spent by the user in finding desired video information.

## Description

### Technical Field

The embodiments of the present invention relate to the surveillance video information providing technology, and in particular, to a method, apparatus and system for providing surveillance video information.

### Background of the Related Art

The Video Surveillant Service (VSS) is a new value-added service totally based on the image remote transmission and management of broadband network. The service system performs networking to disperse, independent image acquisition points using ubiquitous broadband network ports, to realize trans-regional, worldwide unified management and resource sharing and to provide a brand-new, intuitional management tool for enlarging visional and hearing range for management policymakers of all industries, improving working performance.

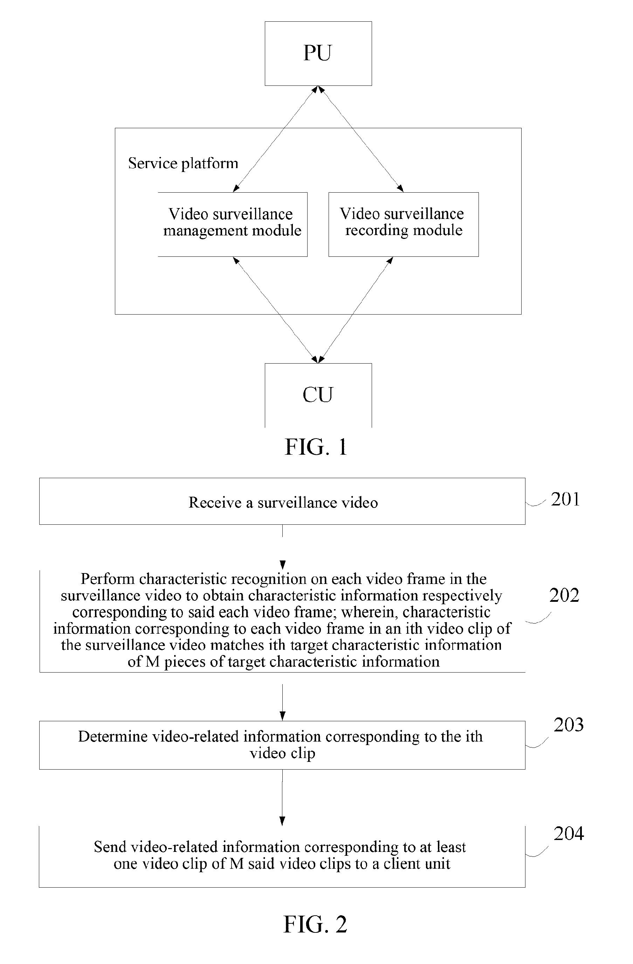

FIG. 1 is a model diagram of a VSS video surveillance system. Referring to FIG. 1, the video surveillance system is composed of three major parts, a front end PU, a Client Unit (CU) and a service platform, wherein, the PU is arranged at a surveillance point to realize the functions, for example, gathering and encoding and uploading video and audio signals, gathering and uploading warning signals, controlling camera and peripheral auxiliary devices, and the PU device is composed of multiple devices including a video camera, a microphone, a warning probe and a cloud probe, with a video server or a network camera as the core. The video surveillant client unit mainly provides the functions, for example, video surveillance, video recording, device controlling and management, for a user, and is a portal facing the final user to realize service capability.

Now the video surveillance system stores the monitored video as a plurality of surveillance video files, and the user calls up each surveillance video file, and looks for video information relating to the key information such as a target people or object during the playing process of each surveillance video file. Now the mode of storing a video and supporting a user to look for desired information of the video surveillance system usually consumes more time and manpower cost.

### Summary of the Invention

For this purpose, the object of the embodiments of the present invention is to provide a method, apparatus and system for providing surveillance video information, to provide the video information relating to the key information such as a target people or object, for a user, thereby reducing the time and manpower cost spent by the user in finding expected video information.

In order to solve the above-mentioned technical problem, the embodiments of the present invention provide the following schemes.

A method for providing surveillance video information, used in a video surveillance system, comprising:
receiving a surveillance video;
performing characteristic recognition on each video frame in the surveillance video to obtain characteristic information respectively corresponding to said each video frame; wherein, characteristic information corresponding to each video frame in an ith video clip of the surveillance video matches ith target characteristic information of M pieces of target characteristic information, and a value range of i is [1, M];
determining video-related information corresponding to the ith video clip; and
sending video-related information corresponding to at least one video clip of M said video clips to a client unit.

Alternatively, the video-related information corresponding to the ith video clip comprises a video time period and/or video device information.

Alternatively, before sending video-related information corresponding to at least one video clip of M said video clips to a client unit, the method further comprises:
correlatively storing ith characteristic information corresponding to the ith video clip and video-related information corresponding to the ith video clip in a search database; wherein, the ith characteristic information is characteristic information corresponding to a video frame which satisfies a preset condition in the ith video clip;
sending video-related information corresponding to any video clip in the at least one video clip to a client unit specifically comprising:
   determining characteristic information corresponding to the video frame which satisfies the preset condition in said any video clip according to an inquiry request input by a user via the client unit;
   searching in the search database according to the characteristic information corresponding to the video frame which satisfies the preset condition in said any video clip, to obtain video-related information corresponding to said any video clip; and
   sending the video-related information corresponding to said any video clip to the client unit.

Alternatively, the inquiry request comprises characteristic information corresponding to the video frame which satisfies the preset condition in said any video clip selected by the user via the client unit from all said ith characteristic information.

Alternatively, the inquiry request comprises an inquiry characteristic picture, and the step of determining characteristic information corresponding to the video frame which satisfies the preset condition in said any video clip according to an inquiry request input by a user via the client unit comprises:
determining inquiry characteristic information according to the inquiry characteristic picture; and
determining characteristic information matching the inquiry characteristic information in all said ith characteristic information as the characteristic information corresponding to the video frame which satisfies the preset condition in said any video clip.

An apparatus for providing surveillance video information, used in a video surveillance system, comprising a receiving module, a recognition module, a determination module, and a sending module; wherein,
the receiving module is configured to: receive a surveillance video;
the recognition module is configured to: perform characteristic recognition on each video frame in the surveillance video to obtain characteristic information respectively corresponding to said each video frame; wherein, characteristic information corresponding to each video frame in an ith video clip of the surveillance video matches ith target characteristic information of M pieces of target characteristic information, and a value range of i is [1, M];
the determination module is configured to: determine video-related information corresponding to the ith video clip; and
the sending module is configured to: send video-related information corresponding to at least one video clip of M said video clips to a client unit.

Alternatively, the video-related information corresponding to the ith video clip comprises a video time period and/or video device information.

Alternatively, the apparatus further comprises a storage module, wherein:
the storage module is configured to: before the sending module sends video-related information corresponding to at least one video clip of M said video clips to a client unit, correlatively store ith characteristic information corresponding to the ith video clip and video-related information corresponding to the ith video clip in a search database; wherein, the ith characteristic information is characteristic information corresponding to a video frame which satisfies a preset condition in the ith video clip;
for any video clip in the at least one video clip, the sending module comprises a determination unit and a searching unit, wherein:
   the determination unit is configured to: determine characteristic information corresponding to a video frame which satisfies the preset condition in said any video clip according to an inquiry request input by a user via the client unit;
   the searching unit is configured to: search in the search database according to the characteristic information corresponding to the video frame which satisfies the preset condition in said any video clip, to obtain video-related information corresponding to said any video clip; and
   send the video-related information corresponding to said any video clip to the client unit.

Alternatively, the inquiry request comprises characteristic information corresponding to a video frame which satisfies the preset condition in said any video clip selected by the user via the client unit from all said ith characteristic information.

Alternatively, the inquiry request comprises an inquiry characteristic picture, and the determination unit comprises a first determination subunit and a second determination subunit, wherein:
the first determination subunit is configured to: determine inquiry characteristic information according to the inquiry characteristic picture; and
the second determination subunit is configured to: determine characteristic information matching the inquiry characteristic information in all said ith characteristic information as the characteristic information corresponding to the video frame which satisfies the preset condition in said any video clip.

A video surveillance system, comprising an apparatus for providing surveillance video information as described above.

The above-mentioned technical schemes performs characteristic recognition on each video frame in a surveillance video to obtain characteristic information respectively corresponding to said each video frame, determines video-related information corresponding to M video clips corresponding to M pieces of target characteristic information, and sends the video-related information corresponding to at least one video clip therein to a client unit, and further matches characteristic information corresponding to each video frame in at least one video clip with at least one piece of target characteristic information of M pieces of the target characteristic information respectively, thus providing video information relating to the key information such as a target people or object, for the user, reducing the time and manpower cost spent by the user in finding expected video information.

### Brief Description of Drawings

- FIG. 1: is a model diagram of a VSS video surveillance system;
- FIG. 2: is a flow chart of steps of a method for providing surveillance video information provided by one embodiment of the present invention;
- FIG. 3: is a schematic diagram of structure of a video characteristic searching system of a preferred embodiment of the embodiments of the present invention;
- FIG. 4: is a schematic diagram of structure of a characteristic recognition module 33 of a preferred embodiment of the embodiments of the present invention;
- FIG. 5: is a schematic diagram of structure of a video characteristic searching module of a preferred embodiment of the embodiments of the present invention;
- FIG. 6: is a flow chart of an example of a method of correlatively storing intelligent video characteristics of a preferred embodiment of the embodiments of the present invention;
- FIG. 7: is a flow chart of an example of a method of searching surveillance video characteristic of a preferred embodiment of the embodiments of the present invention.

### Preferred Embodiments of the Invention

In order to make the object, technical schemes and advantages of the present invention clearer, the embodiments of the present invention are described in detail in conjunction with the accompanying drawings and specific embodiments hereinafter.

FIG. 2 is a flow chart of steps of a method for providing surveillance video information provided by one embodiment of the present invention. Referring to FIG. 2, the embodiments of the present invention provide a method for providing surveillance video information, used in a video surveillance system, including the following steps.

In step 101, it is to receive a surveillance video.

In step 102, it is to perform characteristic recognition on each video frame in the surveillance video to obtain characteristic information respectively corresponding to each video frame; wherein, characteristic information corresponding to each video frame in an ith video clip of the surveillance video matches the ith target characteristic information of M pieces of target characteristic information, and a value range of i is [1, M].

In step 103, it is to determine video-related information corresponding to the ith video clip.

In step 104, it is to send video-related information corresponding to at least one video clip of M said video clips to a client unit.

It is thus clear that characteristic recognition is performed on each video frame in a surveillance video to obtain characteristic information respectively corresponding to said each video frame, video-related information corresponding to M video clips corresponding to M pieces of target characteristic information is determined, video-related information corresponding to at least one video clip therein is sent to the client unit, and further characteristic information corresponding to each video frame in at least one video clip matches characteristic information of at least one piece of target characteristic information in M pieces of target characteristic information respectively, thus providing video information relating to the key information such as a target people or object, for the user, reducing the time and manpower cost spent by the user in finding expected video information.

Wherein, the surveillance video can be an already shot surveillance video input by the user, and can also be a real-time surveillance video transmitted in the form of code stream from the PU device.

Characteristic information is, for example, a characteristic picture, image characteristic information, etc.

A target can be a target people or object, etc.

In step 102, the characteristic recognition can be proceeded simultaneously with receiving a surveillance video, for example, the real-time surveillance video transmitted in the form of code stream from the PU device of the video surveillance system is received, and starting from analyzing the real-time surveillance video code stream to obtain a first video frame, when analyzing the real-time surveillance video code stream to obtain a video frame, characteristic recognition is performed to the video frame to obtain characteristic information corresponding to the video frame.

In addition, in the case that the surveillance video is an already shot surveillance video, characteristic recognition can be performed on each video frame in the surveillance video in any sequence in the specific implementation, which will not be limited here.

A video clip refers to part of video in a certain period of video time in the surveillance video.

As the value range of i is [1, M], M said video clips refer to the M video clips from the 1th video clip to the Mth video clip.

Different video clips in M video clips can be not overlapped, or part overlapped or coincided on the video time.

As mentioned in step 102, characteristic information corresponding to each video frame in the ith video clip matches characteristic information of the ith target. Here matching refers to that, for example, when an image is recognized through pixel and color, the similarity is greater than 80 percent. Certainly, those skilled in the art may readily think of various modes for judging that the characteristic information of two images is matched, which will no longer be repeated here.

In step 103, the video-related information corresponding to the ith video clip can include a period of video time, for example, video duration, video start time, video end time, video duration, etc.. And/or,
the video-related information corresponding to the ith video clip can include video device information, for example, the serial number of the video device, the classified information of the video device (such as, high definition video, low definition video, alarm video, real-time video), etc.

In step 103, it is not limited whether characteristic information corresponding to the former video frame of a video frame at the most front time in the ith video clip matches the characteristic information of the ith target, that is to say, the shooting time of the video frame of the characteristic information matching the characteristic information of the ith target that is first recognized and obtained in the surveillance video can be regarded as the video start time of the ith video clip; or, the shooting time of the next video frame can be regarded as the video start time of the ith video clip only after the characteristic information corresponding to a plurality of continuous video frames matches the characteristic information of the ith target.

In the embodiments of the present invention, considering that the video-related information corresponding to said at least one video clip is in one-to-one correspondence to at least one piece of target characteristic information in the characteristic information of M targets, then the at least one piece of target characteristic information can be determined according to the inquiry condition input by the user via the client unit, thus obtaining video-related information corresponding to the at least one video clip and sending it to the client unit. Or,
the relevant information can also be correlatively stored, and searching the corresponding video-related information according to the inquiry request of the user can be supported, and then:
before sending the video-related information corresponding to at least one video clip in M said video clips to a client unit, the method further can include:
   correlatively storing ith characteristic information corresponding to the ith video clip and video-related information corresponding to the ith video clip in a search database; wherein, the ith characteristic information is characteristic information corresponding to a video frame which satisfies a preset condition in the ith video clip;
said sending video-related information corresponding to any video clip in the at least one video clip to a client unit specifically may comprise:
   determining characteristic information corresponding to a video frame which satisfies the preset condition in said any video clip according to an inquiry request input by a user via the client unit;
   searching in the search database according to the characteristic information corresponding to the video frame which satisfies the preset condition in said any video clip, to obtain video-related information corresponding to said any video clip; and
   sending the video-related information corresponding to said any video clip to the client unit.

Wherein, the preset condition is, for example: a most front or most later time or a certain middle time in all video frames in the ith video clip, or, the highest matching degree with the characteristic information of the ith target (for example, when an image is recognized through pixel and color, the corresponding similarity is the maximum).

The inquiry request can include characteristic information corresponding to the video frame which satisfies the preset condition in said any video clip selected by the user via the client unit from all said ith characteristic information. Or,
the inquiry request can include an inquiry characteristic picture, and said determining characteristic information corresponding to a video frame which satisfies the preset condition in said any video clip according to an inquiry request input by a user via the client unit can specifically include: determining inquiry characteristic information according to the inquiry characteristic picture; and
determining the characteristic information matching the inquiry characteristic information in all said ith characteristic information as the characteristic information corresponding to the video frame which satisfies the preset condition in said any video clip.

Wherein, as the value range of i is [1, M ], all said ith characteristic information refers to the M characteristic information from the 1th characteristic information to the Mth characteristic information.

In order to expound the embodiments of the present invention clearer, the preferred embodiment of the embodiments of the present invention is provided hereinafter.

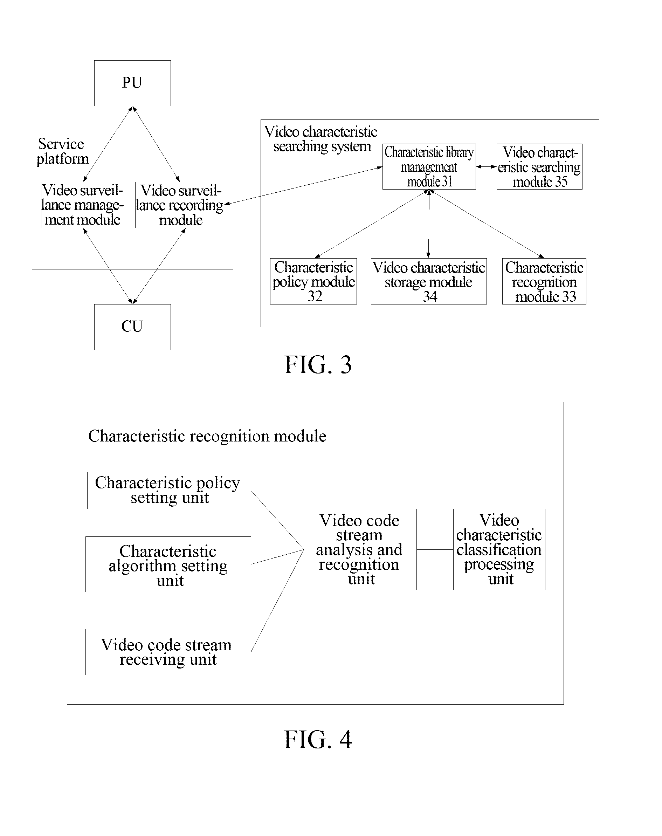

FIG. 3 is a schematic diagram of structure of a video characteristic searching system of the present preferred embodiment. Referring to FIG. 3, in the present preferred embodiment, it can be realized through the video characteristic searching system, and the system includes a characteristic library management module 31, a characteristic policy module 32, a characteristic recognition module 33, a video characteristic storage module 34 and a video characteristic searching module 35; there is an interface between the characteristic library management module 31 and the video surveillance recording module in the VSS video surveillance system, and the system interacts information with the VSS video surveillance system through this interface. Wherein,
the characteristic library management module 31 is configured to: provide an outward interface, process a request of intelligent video, schedule various modules to perform corresponding processing work, and manage data synchronization of various modules, etc. Finally, the intelligent video storage result is returned back to the VSS video surveillance system via this interface;
the characteristic policy module 32 is configured to: establish recognition policy of video characteristic, and the recognition policy can instruct the characteristic recognition module 33 to perform the processing, for example, recognizing and classifying the key image and information;
the characteristic recognition module 33 is configured to: through reading characteristic recognition policy, use a particular characteristic recognition algorithm to perform characteristic recognition in the video;
the video characteristic storage module 34 is configured to: correlatively matchedly store the data, such as image and information, recognized by the characteristic recognition module 33 and video characteristic information, for example, store a face image of someone and correlatively store the relevant information of the human face in the surveillance video, including: camera information, start time, end time, classification information;
the video characteristic searching module 35 is configured to: process a particular searching request of the user, search for the relevant video information through the picture submitted by the user or the existing characteristic picture in the characteristic library selected by the user, to fast position the relevant video.

Alternatively,
the characteristic library management module 31 is mainly configured to: be used for the functions, for example, management of the characteristic library, interaction with the VSS video surveillance system, the system configuration, etc. The characteristic library management module 31 interacts with any VSS video surveillance system via an interface, and the commonality is very high. When any VSS video surveillance system needs to perform intelligent video searching function, a request is sent to the characteristic library management module 31 via the interface, and the corresponding request is sent to the corresponding module of the characteristic library by the characteristic library management module 31. After the processing is completed, the corresponding information is sent to the corresponding VSS video surveillance system via the interface.

The characteristic policy module 32 is mainly configured to: establish the characteristic recognition policy and algorithm. The expansion of the characteristic recognition policy and algorithm of the module can be customized by the user, and have high expansibility. The characteristic policy is provided for use by the characteristic recognition module 33 after established.

The characteristic recognition module 33 is mainly configured to: be used for recognition of a characteristic image, such as a person or object, in the video. After receiving the video characteristic recognition request of the characteristic library management module 31, the characteristic recognition module 33 performs recognition of characteristic image information in the video through the policy and algorithm configured by the characteristic policy module 32. After the characteristic image information is recognized, the characteristic recognition module 33 sends a request to the video characteristic storage module 34 to correlatively store the recognized corresponding characteristic image information and the video-related information: for example, the camera information, the start time of characteristic entering into the camera, the end time, the characteristic classification, the characteristic picture information, etc.

The video characteristic storage module 34 is mainly configured to: achieve the object of performing fast search for a particular surveillance video and characteristic image information by correlatively storing the transmitted characteristic information and picture with the corresponding video relevant information.

The video characteristic searching module 35 is mainly configured to: process a request of a user to search for a video. The user can select corresponding clues such as picture, information, classification, in the characteristic library, and search for the corresponding video relevant information via the characteristic searching module. Because relevant information storage has been performed for the characteristic information and the relevant video, such search mode has a fast speed and accurate positioning. The searched video and characteristic information are returned to the characteristic library management module 31 via a response unit, and then sent to the VSS video surveillance system by the characteristic library management module 31, and the CU in the VSS video surveillance system shows the search result to the user.

The method for storing and searching the VSS video surveillance intelligent video based on the video characteristic searching system includes the following steps.

In step A: the user requests to initiate surveillance video intelligent storage function via a CU.

In step B: the characteristic library management module 31 requests the characteristic policy module 32 to set the policy and algorithm of the video request through the characteristic policy selected or newly built by the user.

In Step C: the characteristic library management module 31 starts to initiate a surveillance video intelligence storage request, and performs analysis and image characteristic recognition for the code stream through the characteristic recognition module 33.

In step D: the characteristic recognition module 33 recognizes the corresponding characteristic information through the corresponding recognition policy and algorithm, and determines whether to store as new characteristic information through the existing characteristic information in the inquiry characteristic library, and requests the video characteristic storage module 34 to intelligently correlatively store the surveillance video.

In step E: the video characteristic storage module 34 correlatively stores the characteristic information recognized in the step D and the corresponding camera, the time period and the classification information. The response is returned to the characteristic library management module 31 after the storage is successful.

In step F: the user performs inquiry of a particular video via the CU, and the user can make a video inquiry choice according to the information, such as picture, classification, time period, in the characteristic library.

In step G: the characteristic library management module 31, by requesting the video characteristic searching module 35 to performs the corresponding video inquiry, finally returns the responded video list to the CU user.

Compared to the original video searching method, this method greatly shortens the search time of a surveillance video, improves service efficiency of the surveillance video, and improves video search accuracy. This method saves the cost of the video surveillance system, the manpower, etc.

FIG. 4 is a schematic diagram of structure of a characteristic recognition module 33 of the present preferred embodiment. Referring to FIG. 4, in the video characteristic searching system, the characteristic recognition module 33 can also further be subdivided into a characteristic policy setting unit, a characteristic algorithm setting unit, a video code stream receiving unit, a video code stream analysis and recognition unit and a video characteristic classification processing unit. Wherein,
the characteristic policy setting unit is mainly configured to: obtain a characteristic recognition policy set by a user;
the characteristic algorithm setting unit is mainly configured to: obtain an algorithm corresponding to the characteristic recognition policy;
the video code stream receiving unit is mainly configured to: obtain the video code stream required to be analyzed;
the video code stream analysis and recognition unit is mainly configured to: perform algorithm analysis to the code stream, and recognize the corresponding characteristic information such as the characteristic picture;
the video characteristic classification processing unit is mainly configured to: classify the recognized characteristic information and send the analyzed characteristic information to the storage module for storage.

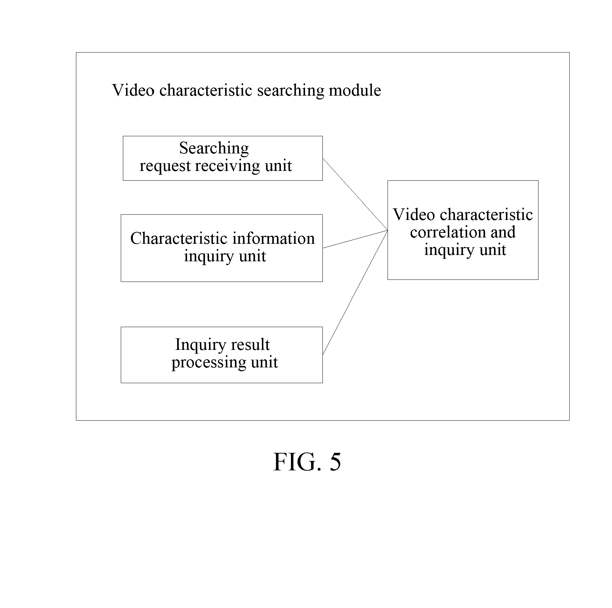

FIG. 5 is a schematic diagram of structure of a video characteristic searching module 35 of the present preferred embodiment. Referring to FIG. 5, in the video characteristic searching system, the video characteristic searching module 35 is further subdivided into: a searching request receiving unit, a characteristic information inquiry unit, a video characteristic correlation and inquiry unit and an inquiry result processing unit. Wherein,
the searching request receiving unit is mainly configured to: receive an inquiry request sent by the CU through the VSS video surveillance system to the characteristic library management module 31, and perform the corresponding processing;
the characteristic information inquiry unit is mainly configured to: inquire the contents already existing in the characteristic library, such as, characteristic picture, other characteristic information, etc.;
the video characteristic correlation and inquiry unit is mainly configured to: perform correlation and inquiry work of the characteristic information and the corresponding video;
the inquiry result processing unit is mainly configured to: return the result inquired by the video characteristic correlation and inquiry unit back to the characteristic library management module 31, and then return to the VSS video surveillance system for display.

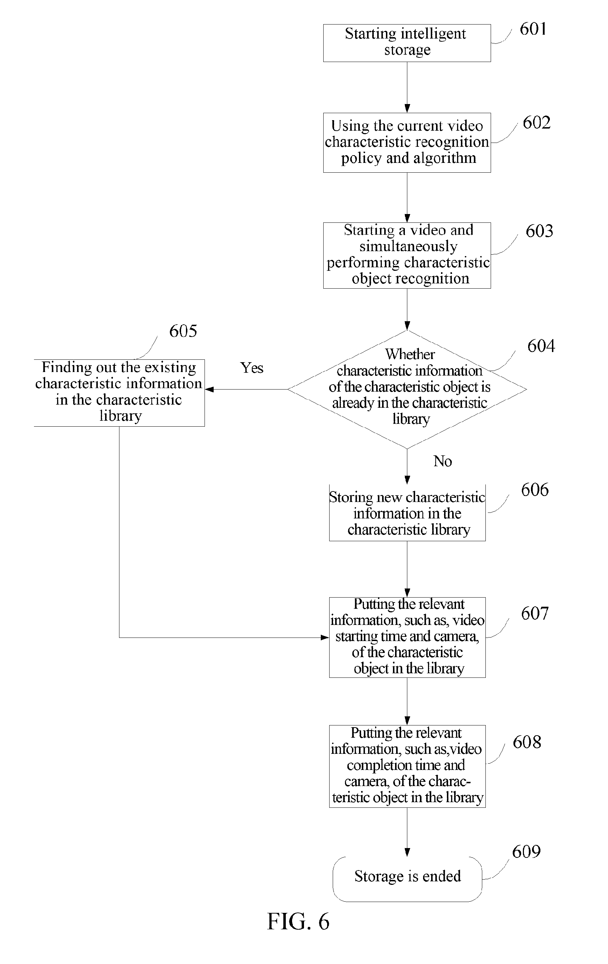

FIG. 6 is a flow chart of an example of a method for correlatively storing intelligent video characteristics of the present preferred embodiment. Referring to FIG. 6, the example of the method for correlatively storing intelligent video characteristics in the preferred embodiment includes the following steps.

In step 601, it is to receive an intelligent video request of the user.

The user sends an intelligent video request via the CU and forwards to the characteristic library management module 31 in the video characteristic searching system through the video surveillance recording module in the VSS video surveillance system, and then the characteristic recognition module 33 receives the request.

In step 602, it is to use the currently set characteristic recognition policy and algorithm.

The characteristic recognition module 33 obtains the corresponding recognition policy and algorithm in the characteristic policy module 32 by requesting the characteristic library management module 31.

In step 603, it is to start a video and simultaneously perform characteristic object recognition at the same time.

The video recognizes characteristic image information or other characteristic information through analyzing the video code stream. Here said 'simultaneously' refers to that the video surveillance system starts video work, while the video characteristic searching system starts to perform recognition and matching work to each frame of video.

In step 604, it is judged whether the recognized characteristic information of the characteristic object is already in the characteristic library by inquiring the existing characteristic information in the characteristic library; if yes, then it is to proceed to step 605; otherwise, it is to proceed to step 606.

In step 605, it is to inquire the existing characteristic information in the characteristic library.

A request for inquiring the existing characteristic information is sent by requesting the characteristic library management module 31. Then the existing characteristic information is inquired through the video characteristic storage module 34.

In step 606, it is to store the newly recognized characteristic information.

A request for storing new characteristic information is sent by requesting the characteristic library management module 31. Then the new characteristic information is stored through the video characteristic storage module 34.

In step 607, it is started to correlatively store the correlated data of the characteristic information and the video.

The video characteristic storage module 34 starts to store the video data such as the video start time and the camera information to correlate with the recognized characteristic information of the characteristic object.

In step 608, it is to store the correlated data of the video completion when the recognized characteristic information of the characteristic object disappears in the video or the video is ended.

The video characteristic storage module 34 stores the video end time to correlate with the recognized characteristic information of the characteristic object.

In step 609, it is to end the intelligent storage video request.

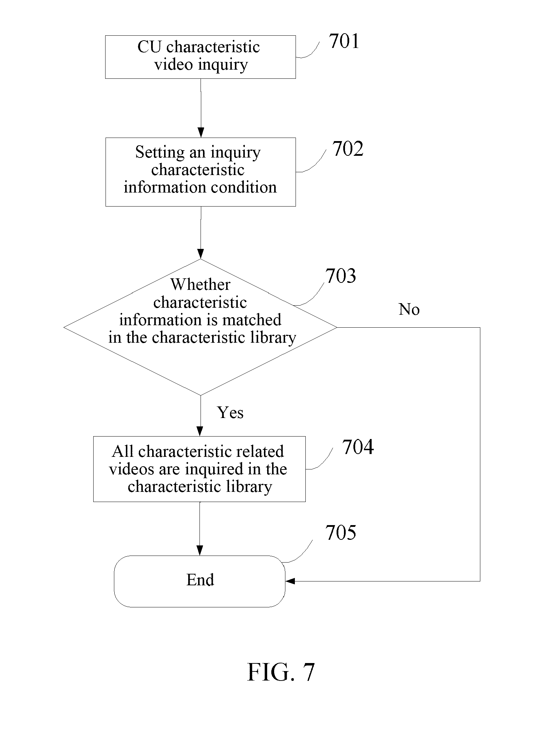

FIG. 7 is a flow chart of an example of a surveillance video characteristic searching method of the present preferred embodiment. Referring to FIG. 7, the example of the method for intelligently correlatively storing video characteristics in the present preferred embodiment includes the following steps.

In step 701, the user sends a characteristic video inquiry request via the CU.

The CU sends the characteristic video inquiry request to the characteristic library management module 31.

In step 702, the user inquires characteristic video through setting a characteristic inquiry condition.

The characteristic library management module 31 interacts with the VSS video surveillance system, to determine the characteristic inquiry condition. Then the characteristic inquiry condition is sent to the video characteristic searching module 35.

In step 703, it is judged whether the characteristic information is matched in the characteristic library through searching for the characteristic library; if yes, it is to proceed to step 704; otherwise, it is to proceed to step 705.

In step 704, all characteristic related videos are inquired in the characteristic library.

The video characteristic searching module 35 inquires the video characteristic storage module 34 based on the matched characteristic information, to obtain all video-related information corresponding to the matched characteristic information.

In step 705, the video searching is ended.

The embodiments of the present invention further provide an apparatus for providing surveillance video information, used in a video surveillance system, including:
a receiving module configured to: receive a surveillance video;
a recognition module configured to: perform characteristic recognition on each video frame in the surveillance video to obtain characteristic information respectively corresponding to said each video frame; wherein, characteristic information corresponding to each video frame in an ith video clip of the surveillance video matches ith target characteristic information of M pieces of target characteristic information, and a value range of i is [1, M];
a determination module configured to: determine video-related information corresponding to the ith video clip; and
a sending module configured to: send video-related information corresponding to at least one video clip of M said video clips to a client unit.

It is thus clear that characteristic recognition is performed on each video frame in surveillance video to obtain characteristic information respectively corresponding to said each video frame, the video-related information corresponding to M video clips corresponding to the M pieces of the target characteristic information is determined, the video-related information corresponding to at least one video clip therein is sent to the client unit, and further characteristic information corresponding to each video frame in at least one video clip matches characteristic information of at least one piece of the target characteristic information in the M pieces of the target characteristic information respectively, thus providing the video information relating to the key information, such as a target person or object, for the user, reducing the time and manpower cost spent by the user in finding the expected video information.

Wherein, the video-related information corresponding to the ith video clip comprises a video time period and/or video device information.

In addition, the apparatus can further include:
a storage module configured to: before said sending module sends video-related information corresponding to at least one video clip of M said video clips to a client unit, correlatively store ith characteristic information corresponding to the ith video clip and video-related information corresponding to the ith video clip in a search database; wherein, the ith characteristic information is characteristic information corresponding to a video frame which satisfies a preset condition in the ith video clip;
for any video clip in the at least one video clip, the sending module specifically includes:
   a determination unit configured to: determine characteristic information corresponding to the video frame which satisfies the preset condition in said any video clip according to an inquiry request input by a user via the client unit;
   a searching unit configured to: search in the search database according to the characteristic information corresponding to the video frame which satisfies the preset condition in said any video clip, to obtain video-related information corresponding to said any video clip; and
   send the video-related information corresponding to said any video clip to the client unit.

Alternatively, the inquiry request can include characteristic information corresponding to the video frame which satisfies the preset condition in said any video clip selected by the user via the client unit from all said ith characteristic information. Or,
the inquiry request can include an inquiry characteristic picture, and the determination unit specifically comprises:
a first determination subunit configured to: determine inquiry characteristic information according to the inquiry characteristic picture; and
a second determination subunit is configured to: determine characteristic information matching the inquiry characteristic information in all said ith characteristic information as the characteristic information corresponding to the video frame which satisfies the preset condition in said any video clip.

The embodiments of the present invention further provide a video surveillance system, including the above-mentioned apparatus for providing surveillance video information.

The above description is the preferred embodiments of the present invention. It should be pointed out that those skilled in the art may also make several improvements and modifications without departing from the principles of the embodiments of the present invention, and all these improvements and modifications should be embodied in the scope of the present invention.

### Industrial Applicability

The above-mentioned technical scheme performs characteristic recognition on each video frame in a surveillance video to obtain characteristic information respectively corresponding to each video frame, determines video-related information corresponding to M video clips corresponding to the M pieces of the target characteristic information, and sends video-related information corresponding to at least one video clip therein to a client unit, and further matches characteristic information corresponding to each video frame in at least one video clip with characteristic information of at least one piece of target characteristic information in the M pieces of the target characteristic information respectively, thus providing the video information relating to the key information, such as a target person and object, for the user, reducing the time and manpower cost spent by the user in finding the expected video information. Therefore, the present invention has very strong industrial applicability.

## Claims

1. A method for providing surveillance video information, used in a video surveillance system, comprising:
receiving a surveillance video;
performing characteristic recognition on each video frame in the surveillance video to obtain characteristic information respectively corresponding to said each video frame; wherein, characteristic information corresponding to each video frame in an ith video clip of the surveillance video matches ith target characteristic information of M pieces of target characteristic information, and a value range of i is [1, M];
determining video-related information corresponding to the ith video clip; and
sending video-related information corresponding to at least one video clip of M said video clips to a client unit.

2. The method for providing surveillance video information according to claim 1, wherein, the video-related information corresponding to the ith video clip comprises a video time period and/or video device information.

3. The method for providing surveillance video information according to claim 1, wherein, before sending video-related information corresponding to at least one video clip of M said video clips to a client unit, the method further comprises:
correlatively storing ith characteristic information corresponding to the ith video clip and video-related information corresponding to the ith video clip into a search database; wherein, the ith characteristic information is characteristic information corresponding to a video frame which satisfies a preset condition in the ith video clip;
wherein sending video-related information corresponding to any video clip in the at least one video clip to a client unit specifically comprises:
determining characteristic information corresponding to the video frame which satisfies the preset condition in said any video clip according to an inquiry request input by a user via the client unit;
searching in the search database according to the characteristic information corresponding to the video frame which satisfies the preset condition in said any video clip, to obtain video-related information corresponding to said any video clip; and
sending the video-related information corresponding to said any video clip to the client unit.

4. The method for providing surveillance video information according to claim 3, wherein, the inquiry request comprises characteristic information corresponding to the video frame which satisfies the preset condition in said any video clip selected by the user via the client unit from all said ith characteristic information.

5. The method for providing surveillance video information according to claim 3, wherein, the inquiry request comprises an inquiry characteristic picture, and the step of determining characteristic information corresponding to the video frame which satisfies the preset condition in said any video clip according to an inquiry request input by a user via the client unit comprises:
determining inquiry characteristic information according to the inquiry characteristic picture; and
determining characteristic information matching the inquiry characteristic information in all said ith characteristic information as the characteristic information corresponding to the video frame which satisfies the preset condition in said any video clip.

6. An apparatus for providing surveillance video information, used in a video surveillance system, comprising a receiving module, a recognition module, a determination module, and a sending module; wherein, the receiving module is configured to: receive a surveillance video; the recognition module is configured to: perform characteristic recognition on each video frame in the surveillance video to obtain characteristic information respectively corresponding to said each video frame; wherein, characteristic information corresponding to each video frame in an ith video clip of the surveillance video matches ith target characteristic information of M pieces of target characteristic information, and a value range of i is [1, M];
the determination module is configured to: determine video-related information corresponding to the ith video clip; and
the sending module is configured to: send video-related information corresponding to at least one video clip of M said video clips to a client unit.

7. The apparatus for providing surveillance video information according to claim 6, wherein, the video-related information corresponding to the ith video clip comprises a video time period and/or video device information.

8. The apparatus for providing surveillance video information according to claim 6, further comprising a storage module, wherein:
the storage module is configured to: before the sending module sends video-related information corresponding to at least one video clip of M said video clips to a client unit, correlatively store ith characteristic information corresponding to the ith video clip and video-related information corresponding to the ith video clip into a search database;
wherein, the ith characteristic information is characteristic information corresponding to a video frame which satisfies a preset condition in the ith video clip;
for any video clip in the at least one video clip, the sending module comprises a determination unit and a searching unit, wherein:
the determination unit is configured to: determine characteristic information corresponding to a video frame which satisfies the preset condition in said any video clip according to an inquiry request input by a user via the client unit;
the searching unit is configured to: search in the search database according to the characteristic information corresponding to the video frame which satisfies the preset condition in said any video clip, to obtain video-related information corresponding to said any video clip; and
send the video-related information corresponding to said any video clip to the client unit.

9. The apparatus for providing surveillance video information according to claim 8, wherein, the inquiry request comprises characteristic information corresponding to a video frame which satisfies the preset condition in said any video clip selected by the user via the client unit from all said ith characteristic information.

10. The apparatus for providing surveillance video information according to claim 8, wherein, the inquiry request comprises an inquiry characteristic picture, and the determination unit comprises a first determination subunit and a second determination subunit, wherein:
the first determination subunit is configured to: determine inquiry characteristic information according to the inquiry characteristic picture; and
the second determination subunit is configured to: determine characteristic information matching the inquiry characteristic information in all said ith characteristic information as the characteristic information corresponding to the video frame which satisfies the preset condition in said any video clip.

11. A video surveillance system, comprising an apparatus for providing surveillance video information described in any of claims 6 to 10.
